# EUROPEAN PATENT SPECIFICATION

(11) **EP 0 587 419 B1**
(45) Date of publication and mention of the grant of the patent: **22.07.1998**
(21) Application number: 93307074.0
(22) Date of filing: 08.09.1993
(51) Int. Cl.: A01N 43/30

(54) **Louse and tick repellent compositions**
Laus- und Zeckenabweisende Zusammensetzungen
Compositions répulsives contre la tique et le poux

(30) Priority: 08.09.1992 GB 9218949
(43) Date of publication of application: 16.03.1994
(73) Proprietor: UNICLIFFE LIMITED, Stonar, Kent CT13 9NJ (GB)
(72) Inventor: Irwin, Richard Neil, Medstead, NR Alton, Hants, GU34 5ES (GB)
(74) Representative: Rickard, Timothy Mark Adrian

(56) References cited:
- EP-A- 0 156 263
- WO-A-90/09738
- CENTRAL PATENTS INDEX, BASIC ABSTRACTS JOURNAL Section Ch, Week K08, 20 April 1983 Derwent Publications Ltd., London, GB; Class C, AN 18911 K/08 & JP-A-58 008 005 (EARTH SEIYAKU) 18 January 1983
- DATABASE CHEMABS CHEMICAL ABSTRACTS SERVICE, COLUMBUS, OHIO, US CA75:34403x B.B.LURIK ET AL. 'Search of synergists for sevin in series of piperonyl acid esters. I' & TR.TSENT.NAUCH.-ISSLED.DEZINFEK.INST. no. 20 pages 279 - 283 & REF.ZH.,KHIM. 1970, ABSTR. NO. 14N636
- DATABASE WPI Week 6800, Derwent Publications Ltd., London, GB; AN 67-03035H [00] & JP-B-43 016 069 (YOSHITOMI SEIYAKU)
- DATABASE CHEMABS CHEMICAL ABSTRACTS SERVICE, COLUMBUS, OHIO, US CA99:117871v & JP-A-58 096 002 (EARTH CHEMICAL) 7 June 1983
- CHEMICAL ABSTRACTS, vol. 108, no. 23, 6 June 1988, Columbus, Ohio, US; abstract no. 200240p, page 255 ;column 1 ; & JP-A-62 234 004 (MITSUBISHI CHEMICAL INDUSTRIES) 14 October 1987
- CHEMICAL PATENTS INDEX, DOCUMENTATION ABSTRACTS JOURNAL Section Ch, Week 9222, 29 July 1992 Derwent Publications Ltd., London, GB; Class C, AN 92-180090/22 & JP-A-4 117 306 (SUMITOMO CHEM) 17 April 1992

## Description

This invention relates to compositions for repelling or destroying lice and ticks.

It has been surprisingly found that a range of 3, 4-methylene dioxyaromatic derivatives have pediculicidal, lice and tick repellent properties.

According to the invention there is provided the use of a compound of general formula I in the manufacture of a medicament for repelling lice or tick 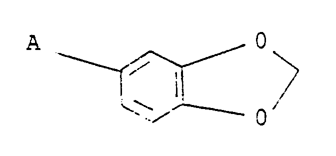
where A is - CO₂R or - CH₂OCOR
and R is H or a C₁ to C₆ substituent.

According to the invention there is further provided the use of a compound of general formula I in the manufacture of a medicament for destroying or repelling ticks or lice.

Preferred compounds have general formulae II, III, IV or V:

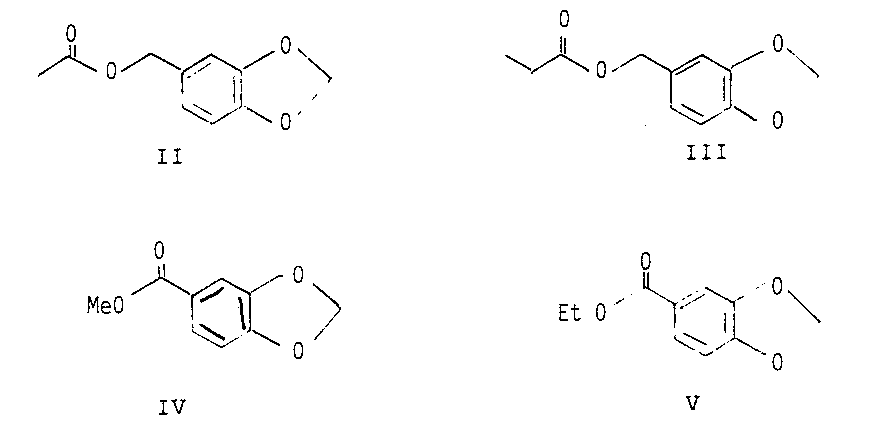

The compounds of the invention are readily available. They may be obtained commercially or synthetically for example by esterification of piperonylic acid or piperonyl alcohol.

R is conveniently C₁ to C₆ preferably C₁, C₂ or C₃ alkyl. Straight, branched and cyclo substituents which may be saturated or unsaturated are envisaged as within the scope of the invention.

The above compounds are conveniently presented in alcohol solution. The alcohol composition is, preferably, a mixture of ethanol and propanol especially iso-propanol. High concentrations of alcohol are preferably avoided to reduce the possibility of the alcohol irritating the skin.

The amount of alcohol present can be reduced by incorporation of at least one emulsifier, preferably an hydroxy fatty acid, or a nonionic emulsifier such as alkoxylated fatty alcohol or alkoxylated fatty acid in the composition.

Preferably two emulsifiers are used for example a hydroxy fatty alcohol alkoxylate and an alkoxylated fatty, especially castor oil, acid. These two emulsifiers appear to act synergistically in keeping the active ingredient in solution.

Some of the compounds of use in the invention are solid at ambient temperature. For example piperonylic acid, has a melting point of 230°C and methyl piperonylate has a melting point of 53°. The presence of emulsifier stabilises the composition against crystallisation at low temperature e.g. down to 0°C which reduces the danger of crystals forming and blocking the dispenser in use. The preferred composition tends to form a film on the skin or hair without the rapid formation of crystals. The preferred compositions therefore have a good appearance when applied to the hair or skin.

The preferred embodiments of the invention have high water content and thus can be more pleasant to use than high alcohol content compositions. The active can be employed in relatively low concentrations and still be effective.

Those skilled in the art will be able to devise suitable concentrations of ingredients on the basis of the present disclosure and routine experimentation.

By way of example the compound of general formula I is generally present in amounts of at least 0.5 wt% preferably 1 wt%. Little extra benefit is generally achieved with concentrations in excess of 10 wt% and in general maxima of around 3 to 5 wt% will be found to be satisfactory.

The amount of emulsifier (where present) will depend upon the amount and solubility of the compound of formula I. In general 1 to 10 wt% preferably 2 to 5 wt% each emulsifier will be found satisfactory.

Typically around 20 to 60 wt% of the preferred compositions is alcohol. The preferred composition may include an antimicrobial agent such as phenoxyethanol in biostatic concentration e.g. 1 wt%. The balance of the composition may be water. If desired colouring agents perfumes or other materials may be included. The active ingredient may be presented in other ways.

Examples of the invention will be described by way of illustration. All amounts are wt%.

### Example 1

| | |
|---|---|
| Piperonylacetate | 2.0 |
| EMULGIN L | 3.0 |
| EMULGIN RO4O | 3.0 |
| Phenoxyethanol | 1.0 |
| Denatured ethanol | 25.3 |
| Iso-propanol | 7.6 |
| Mains water - UV treated | 58.1 |

EMULGIN is a registered trade mark of Henkel AG. EMULGIN L is a 2-hydroxy fatty acid alkoxylate. EMULGIN RO4O contains polyglcol esters of castor oil fatty acids and small amounts of ethoxylated glycerine.

The EMULGINS were dissolved in the water together with the phenoxyethanol. The piperonyl acetate was dissolved in the ethanol. The isopropanol was added to the ethanol solution and the components mixed to form a clear solution. The resulting solution can be packaged in an aerosol or pump-type dispenser.

### Example 2

| | |
|---|---|
| Methyl piperonylate | 2 |
| EMULGIN L | 3 |
| EMULGIN RO4O | 3 |
| Phenoxyethanol | 1 |
| Denturated ethanol | 25.3 |
| Isopropanol | 7.6 |
| Mains water - UV treated | 58.3 |

The composition was made up as described in Example 1.

The compositions were found to be effective in repelling lice and ticks. The ticks Ixodes daminni and I. ricinus implicated in human disease were repelled.

## Claims

1. The use of a compound of general formula I in the manufacture of a medicament for repelling lice or tick 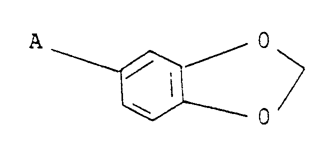
where A is - CO₂R or - CH₂OCOR
and R is H or a C₁ to C₆ substituent.

2. A use as claimed in Claim 1 wherein the compound of general formula I is selected from

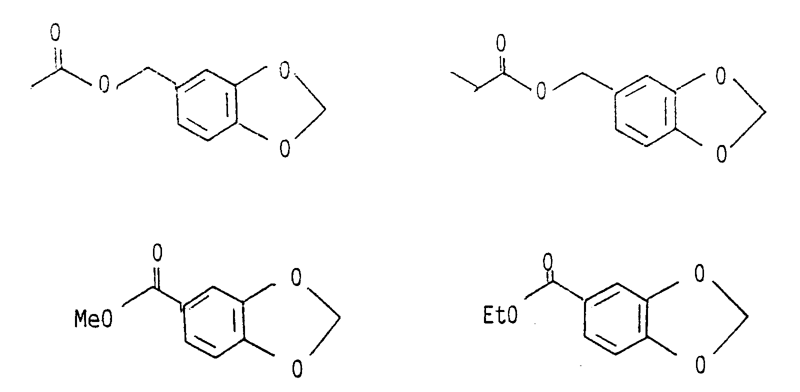

3. The use of a composition comprising:
i. at least 0.5wt% of a compound of general formula I,
ii. aqueous alcohol, and
iii. an alkoxylated fatty alcohol or alkoxylated fatty acid nonionic emulsifier, as a louse or tick repellent.

4. A composition as claimed in Claim 3 wherein component III comprises hydroxy fatty alcohol alkoxylate and an akoxylated fatty acid.

5. A composition as claimed in Claim 3 or Claim 4 wherein the alcohol comprises ethanol and isopropanol.

6. A composition as claimed in any one of Claims 3 to 5 being capable of forming a film on the skin without the rapid formation of crystals.

## Patentansprüche

1. Verwendung einer Verbindung der allgemeinen Formel I zur Herstellung eines Arzneimittels zum Abweisen von Läusen oder Zecken 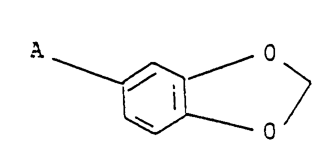
wobei A bedeutet: - C0₂R oder - CH₂OCOR
und R bedeutet: H oder ein C₁ bis C₆-Substituent.

2. Verwendung gemaß Anspruch 1, wobei die Verbindung gemäß Formel II aus einer der nachfolgenden Verbindungen ausgewählt wird:

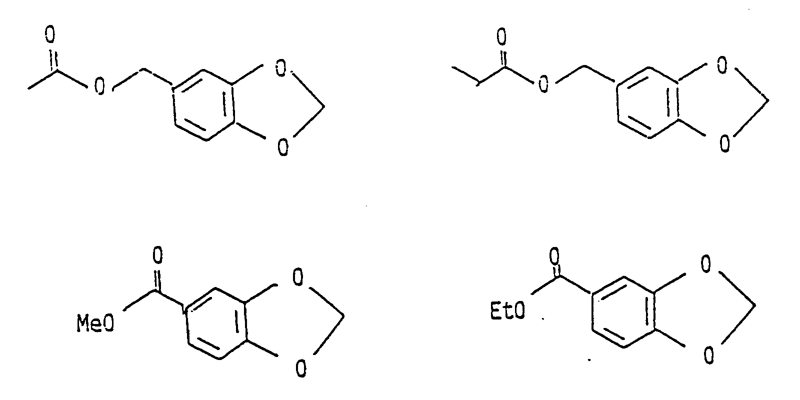

3. Verwendung einer Zusammensetzung umfassend:
i. mindesten 0,5 Gewichts-% einer Verbindung gemäß der allgemeinen Formel I
ii. wässriger Alkohol und

4. Verbindung gemäß Anspruch 3, wobei Komponente III umfaßt: Hydroxyfettalkohol-Alkoxylat und eine alkoxylierte Fettsäure.

5. Verbindung gemäß Anspruch 3 oder 4, worin der Alkohl Ethanol und Isopropanol umfaßt.

6. Verbindung gemäß einem der Ansprüche 3 bis 5, die in der Lage ist, einen Film auf der Haut auszubilden, ohne daß sehr schnell Kristalle ausgebildet werden.

## Revendications

1. Utilisation dans la préparation d'un médicament destiné à repousser les poux ou les tiques, d'un composé de formule générale I : 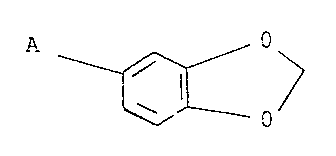
dans laquelle A représente un groupe -CO₂R ou -CH₂OCOR,
R désignant un atome d'hydrogène ou un substituant en C₁ à C₆.

2. Utilisation selon la revendication 1, dans laquelle le composé de formule générale I est choisi parmi :

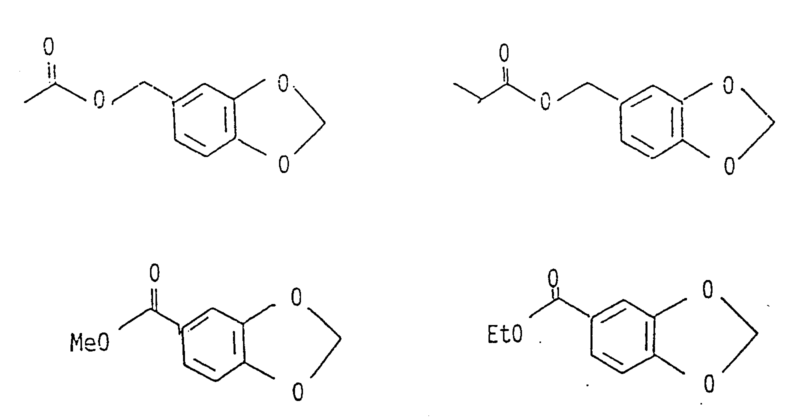

3. Utilisation comme agent repoussant les poux ou les tiques, d'une composition comprenant :
i) au moins 0,5 % en poids d'un composé de formule générale I,
ii) un mélange d'eau et d'alcool, et
iii) un émulsifiant non ionique du type alcool gras alcoxylé ou acide gras alcoxylé.

4. Composition selon la revendication 3, dans laquelle le constituant iii renferme un alcoxylate d'alcool gras hydroxylé et un acide gras alcoxylé.

5. Composition selon la revendication 3 ou 4, dans laquelle l'alcool comprend de l'éthanol et de l'isopropanol.

6. Composition selon l'une quelconque des revendications 3 à 5, qui est capable de former un film sur la peau sans formation rapide de cristaux.
